# FASCICULE DE BREVET EUROPEEN

(11) **EP 0 495 712 B1**
(45) Date de publication et mention de la délivrance du brevet: **26.07.1995**
(21) Numéro de dépôt: 92400100.1
(22) Date de dépôt: 15.01.1992
(51) Int. Cl.: B29C 44/18, B60J 5/04

(54) **Procédé de réalisation d'une porte pour véhicule, notamment pour véhicule automobile; sous-ensembles pour la mise en oeuvre de ce procédé et porte susceptible d'être obtenue par cette mise en oeuvre**
Verfahren zur Herstellung einer Fahrzeugtür, insbesondere für ein Automobil; Unter-Einheit zur Anwendung des Verfahrens und Tür welche durch die Anwendung des Verfahrens erhalten wird
Method of manufacturing a vehicle door, particularly for a car; sub assemblies to carry out this process and door obtainable by this process

(30) Priorité: 17.01.1991 FR 9100498
(43) Date de publication de la demande: 22.07.1992
(73) Titulaire: LEBRANCHU S.A., F-95250 Beauchamp (FR)
(72) Inventeur: Guillarmo, Jean-Yves, F-28420 Miermaigne (FR); Moreau, Jean-Marc, F-95110 Sannois (FR)
(74) Mandataire: Martin, Jean-Jacques

(56) Documents cités:
- EP-A- 0 370 767
- DE-A- 2 408 777
- DE-A- 3 217 640

## Description

La présente invention concerne la réalisation d'une porte pour véhicule, notamment pour véhicule automobile, ladite porte devant offrir une rigidité prédéterminée, présentant un côté extérieur et un côté intérieur et comportant :
- un ensemble rigide comportant, de façon solidaire, une partie formant panneau extérieur, une partie formant médaillon intérieur, et une partie formant cadre, disposée entre la partie formant panneau extérieur et la partie formant médaillon intérieur et délimitant avec celles-ci un volume interne, ledit ensemble présentant ladite rigidité déterminée,
- des moyens accessoires choisis dans un groupe comportant des mécanismes de serrure, de lève-vitre, des dispositifs de sonorisation, de climatisation, de connexion, d'éclairage, un garnissage intérieur de porte, lesdits moyens accessoires étant portés par ledit ensemble et au moins certains d'entre eux étant logés à l'intérieur dudit volume interne.

Les notions d'intérieur et d'extérieur s'entendent ici par référence à la carrosserie du véhicule terminé.

Traditionnellement, on réalise une telle porte en fabriquant d'abord ledit ensemble, par emboutissage puis assemblage par soudure et/ou collage et/ou sertissage de pièces de tôle en constituant les différentes parties précitées, en appliquant ensuite à cet ensemble divers traitements de préservation de la tôle et en le peignant, généralement simultanément avec les autres constituants de la carrosserie du véhicule auquel la porte est destinée, et enfin en montant sur ledit ensemble les moyens accessoires prévus pour le véhicule considéré, et en priorité ceux de ces moyens accessoires qui doivent être logés à l'intérieur dudit volume interne.

Ce montage nécessite que l'on prévoie dans la partie formant médaillon intérieur de multiples ouvertures qui affaiblissent considérablement cette dernière qui, de ce fait, contribue peu à l'obtention de la rigidité prédéterminee de la porte ; cette rigidité est fournie essentiellement par la partie formant panneau extérieur et la partie formant cadre, qui doivent être renforcées par l'apport de différents renforts, généralement soudés, au détriment du coût de fabrication de la porte et de son poids.

Les multiples ouvertures de la partie formant médaillon intérieur présentent en outre l'inconvénient d'entraîner un manque d'étanchéité aux bruits, à l'air et à l'eau vers l'intérieur du véhicule.

A ces inconvénients s'ajoute le fait que, en dépit des multiples ouvertures aménagées dans la partie formant médaillon intérieur, le montage des différents moyens accessoires, notamment à l'intérieur dudit volume interne, constitue une opération longue et fastidieuse qui, si elle est pratiquée sur chaîne d'assemblage de véhicules, c'est-à-dire au fur et à mesure d'une avance, en continu, d'un véhicule en cours de fabrication, ou encore sur une ligne d'assemblage de portes synchronisée avec une chaine d'assemblage de véhicules, nécessite un personnel abondant si l'on désire ne pas ralentir excessivement la chaîne d'assemblage.

Le but de la présente invention est de remédier a ces inconvénients et, à cet effet, la présente invention propose un procédé de réalisation d'une porte du type indiqué en préambule, devant offrir une rigidité prédéterminée, ce procédé étant caractérisé par la succession des étapes consistant à :
a) réaliser séparément un premier sous-ensemble rigide comportant, de façon solidaire, la partie formant panneau extérieur et la partie formant cadre, ladite partie formant cadre présentant du' côté intérieur de la porte une large ouverture, et un deuxième sous-ensemble rigide comportant la partie formant médaillon intérieur et au moins ceux desdits moyens accessoires qui sont destinés à être logés à l'intérieur dudit volume interne et présentant des dimensions telles qu'il puisse couvrir sensiblement intégralement ladite ouverture, chacun des premier et deuxième sous-ensembles présentant intrinséquement une rigidité insuffisante en comparaison avec ladite rigidité prédéterminée,
b) placer les premier et deuxième sous-ensembles dans une position relative dans laquelle le deuxième sous-ensemble couvre sensiblement intégralement ladite ouverture et solidariser la partie formant médaillon intérieur avec la partie formant cadre, autour de ladite ouverture pour constituer uné porte offrant du fait de cette solidarisation ladite rigidité prédéterminée.

L'obtention d'une rigidité prédéterminée pour la porte met alors en oeuvre non seulement la partie formant panneau extérieur et la partie formant cadre, qui peuvent de ce fait se trouver allégées et simplifiées en comparaison avec l'Art antérieur, mais également la partie formant médaillon intérieur qui, après solidarisation mutuelle des deux sous-ensembles, participe pleinement à l'obtention de la rigidité requise ; on peut ainsi se dispenser des renforts précités et après assemblage, les deux sous-ensembles forment ensemble un caisson fermé, dont un Homme du métier sait, de façon générale, qu'il présente à rigidité équivalente un poids moindre en comparaison avec un caisson ouvert.

En outre, les opérations de montage des moyens accessoires, en pratique sur le deuxième sous-ensemble, peuvent s'effectuer dans de meilleures conditions d'accessibilité, c'est-à-dire plus rapidement, que lorsque l'on met en oeuvre les techniques de fabrication précédemment connues, ce qui permet d'écourter le temps de main-d'oeuvre nécessaire a l'assemblage d'une porte ; en outre, ces meilleures conditions d'accessibilité permettent une robotisation importante de cet assemblage. De plus, la réalisation du deuxième sous-ensemble peut être dissociée de celle du premier sous-ensemble qui peut être réalisé, lors de l'étape a, sous une forme comportant également des charnières de montage de la porte sur le reste du véhicule, solidaires de ladite partie formant cadre si bien que, notamment, dans le cas d'une fabrication d'un véhicule sur chaîne d'assemblage avançant en continu, ce premier sous-ensemble peut être monté par ces charnières sur le reste du véhicule et évoluer avec lui, et en particulier subir les opérations traditionnelles de traitement des tôles et de peinture alors que l'on fabrique le deuxième sous-ensemble dans un atelier distinct, avant de l'assembler au premier sous-ensemble sur la chaîne d'assemblage de véhicules ; cette opération d'assemblage nécessite en elle-même beaucoup moins d'interventions, sur la chaîne d'assemblage de véhicules, que les opérations traditionnelles de montage des différents moyens accessoires, ce qui permet de limiter le personnel présent à cet effet sur la chaîne sans pour autant ralentir cette dernière.

Enfin, une fois le véhicule terminé, une porte réalisée conformément à la présente invention offre un silence et une étanchéité accrus en comparaison avec une porte réalisée par les techniques antérieurement connues, du fait de la disparition des phénomènes dûs à la présence des multiples ouvertures dans la partie formant médaillon intérieur d'une telle porte.

Naturellement, il est préférable de réaliser le deuxième sous-ensemble, lors de l'étape a), sous une forme comportant, outre les moyens accessoires destinés à être logés dans le volume interne de la porte, au moins certains, et de préférence un maximum, des moyens accessoires qui sont destinés à être placés à l'extérieur de ce volume interne comme par exemple un garnissage intérieur de porte, une poignée de tirage de porte, un support de tirette de serrure, ces exemples n'étant nullement limitatifs.

A cet égard, le fait de dissocier les réalisations respectives du premier sous-ensemble et du deuxième sous-ensemble, c'est-à-dire de réaliser ce dernier en dehors des chaînes d'assemblage de véhicules, permet d'accéder, pour la réalisation de ce deuxième sous-ensemble, à des techniques particulièrement avantageuses de réalisation d'un garnissage intérieur de porte.

En effet, lorsqu'on fabrique une porte conformément à la présente invention, on peut avantageusement réaliser un garnissage intérieur par surmoulage, lors de l'étape a), en plaçant la partie formant médaillon intérieur dans un moule de réalisation d'un garnissage intérieur de porte par moulage d'un matérieau initialement liquide ou pâteux et susceptible de faire prise, notamment un matériau à expansion du type mousse, assurant une insonorisation et une isolation thermique, et permettant de communiquer au garnissage intérieur de porte une souplesse prédéterminée, puis en emplissant ledit moule dudit matériau en y noyant au moins partiellement la partie formant médaillon intérieur, puis en autorisant ou provoquant la prise dudit matériau pour constituer le garnissage intérieur de porte en y ancrant solidairement ladite partie formant médaillon intérieur, et en séparant ensuite du moule la partie formant médaillon intérieur, portant solidairement le garnissage intérieur de porte. Avant d'emplir le moule dudit matériau, on peut y disposer certains desdits moyens' accessoires autres que le garnissage de porte, à savoir notamment des moyens qui ne risquent pas de nécessiter d'opérations ultérieures de maintenance tels que des chemins de câbles de connexion ou des conduites de ventilation, de chauffage ou de dégivrage et/ou le tapisser d'une peau de garnissage, de telle sorte que lorsqu'on emplit le moule dudit matériau, ces moyens accessoires soient noyés au moins partiellement dans celui-ci et s'y ancrent solidairement lors de sa prise et que lors de cette prise, ladite peau de garnissage devienne solidaire dudit matériau. Avantageusement, lors de cette même étape a), on monte également certains des moyens accessoires, autres que le garnissage intérieur de porte, sur la partie formant médaillon intérieur après avoir séparé du moule la partie formant médaillon intérieur portant solidairement le garnissage intérieur de porte ; ce montage peut s'effectuer par le côté de la partie formant médaillon intérieur destiné à être tourné ultérieurement, lors de l'étape b), vers le volume interne de la porte, même en ce qui concerne des moyens accessoires destinés à être tournés vers l'intérieur de la carrosserie du véhicule terminé, ce qui rend particulièrement discret le montage de ces moyens accessoires et permet de n'intervenir pratiquement que de ce côté de la partie formant médaillon intérieur pour monter l'ensemble des moyens accessoires autres que le garnissage intérieur de porte et ceux de ces moyens accessoires qui y sont éventuellement noyés.

Le deuxième sous-ensemble, groupant ainsi la partie formant médaillon et un maximum des moyens accessoires, en particulier le garnissage intérieur de porte, peut ensuite être assemblé en monobloc, en une seule opération d'assemblage, avec le premier sous-ensemble, après quoi il forme partie intégrante de la structure de la porte, c'est-à-dire participe pleinement aux caractéristiques mécaniques de celle-ci.

Naturellement, la réalisation du deuxième sous-ensemble, lors de l'étape a), doit être suffisamment précise pour que, après son assemblage avec le premier sous-ensemble, les différents moyens accessoires occupent sur la porte des positions rigoureusement déterminées notamment lorsqu'ils doivent coopérer avec d'autres moyens accessoires portés par l'entourage de la porte sur la carrosserie, comme c'est notamment le cas d'une serrure, ou encore coopérer de l'un des sous-ensembles à l'autre, comme c'est notamment le cas lorsque la porte à réaliser doit comporter une glace coulissante ; dans ce dernier cas, on met en oeuvre la présente invention selon un mode préféré selon lequel, lors de l'étape a), on réalise le premier sous-ensemble sous une forme comportant des moyens formant encadrement et glissière de réception d'une glace et le deuxième sous-ensemble sous une forme comportant un mécanisme de lève-glace, une amorce de glissière susceptible de se placer dans le prolongement desdits moyens formant encadrement et glissière lors de l'étape b) et une glace à l'état baissé, en prise d'une part avec le mécanisme de lève-glace et d'autre part avec ladite amorce de glissière.

Dans la mesure où la mise en oeuvre du procédé selon l'invention se traduit par la réalisation de sous-ensembles originaux, et aboutit à la réalisation d'une porte en elle-même originale, la présente invention s'étend également à de tels sous-ensembles destinés à la réalisation d'une porte de véhicule, notamment de véhicule automobile, par la mise en oeuvre du procédé selon l'invention, ainsi qu'à une porte susceptible d'être obtenue par la mise en oeuvre de ce procédé.

L'invention sera mieux comprise si l'on se réfère à la description ci-dessous, relative à un mode de mise en oeuvre non limitatif, ainsi qu'aux dessins annexés qui font partie intégrante de cette description.
- La figure 1 illustre, en une vue éclatée, la fabrication d'une porte de véhicule automobile conformément à la présente invention.
- La figure 2 montre une vue du deuxième sous-ensemble précité de cette porte, formant un sous-ensemble monobloc structurel de garnissage, en coupe par un plan repéré en II-II à la figure 1.
- La figure 3 illustre une première phase de la réalisation de ce deuxième sous-ensemble selon un mode de mise en oeuvre préféré de la présente invention, par surmoulage d'un garnissage intérieur de porte sur la partie formant médaillon intérieur, le deuxième sous-ensemble en cours de réalisation étant vu en coupe selon un plan repéré en III-III à la figure 1, parallèle au plan repéré en II-II.

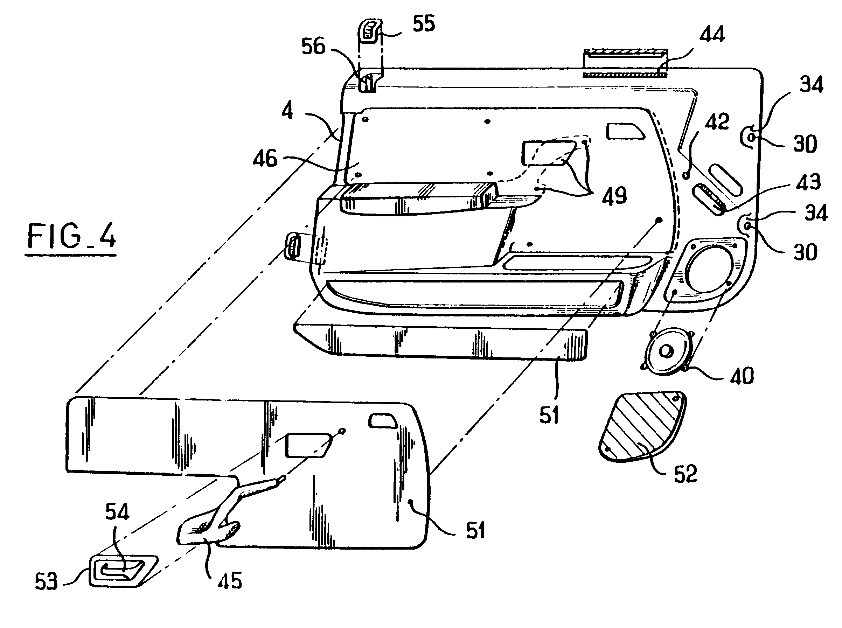

- La figure 4 illustre une deuxième phase de la réalisation de ce deuxième sous-ensemble, à savoir le montage des moyens accessoires autres que le garnissage intérieur de porte et destinés à être tournés vers l'intérieur du véhicule, en une vue éclatée et en perspective.
- La figure 5 illustre une troisième phase de la réalisation du deuxième sous-ensemble, à savoir le montage des moyens accessoires destinés à être logés à l'intérieur du volume interne de la porte.
- La figure 6 illustre l'assemblage des premier et deuxième sous-ensembles en une vue en coupe selon le plan repéré en III-III à la figure 1.

Naturellement, bien que la présente invention soit décrite en référence à la réalisation d'une porte de véhicule automobile, comportant un certain nombre de moyens accessoires déterminés tels qu'un mécanisme de serrure 1, une glace coulissante 2 munie d'un mécanisme 3 de lève-glace, par exemple électrique, des moyens de sonorisation sous la forme d'un haut-parleur 40, des moyens de connexion électrique correspondants sous la forme d'un faisceau de câbles 4 partiellement logé dans un chemin de câbles 42, des moyens de climatisation sous la forme d'un conduit 43 de ventilation et de chauffage et d'une buse 44 de dégivrage de la glace 2, un garnissage intérieur de porte 4 et une poignée intérieure 45 de tirage de porte, l'invention peut également trouver son application dans la réalisation de tout autre type de porte de véhicule, comportant tout ou partie des moyens accessoires précités et/ou d'autres moyens accessoires tels que des accoudoirs, des vide-poche, des cendriers, des moyens d'éclairage, ces exemples n'étant nullement limitatifs.

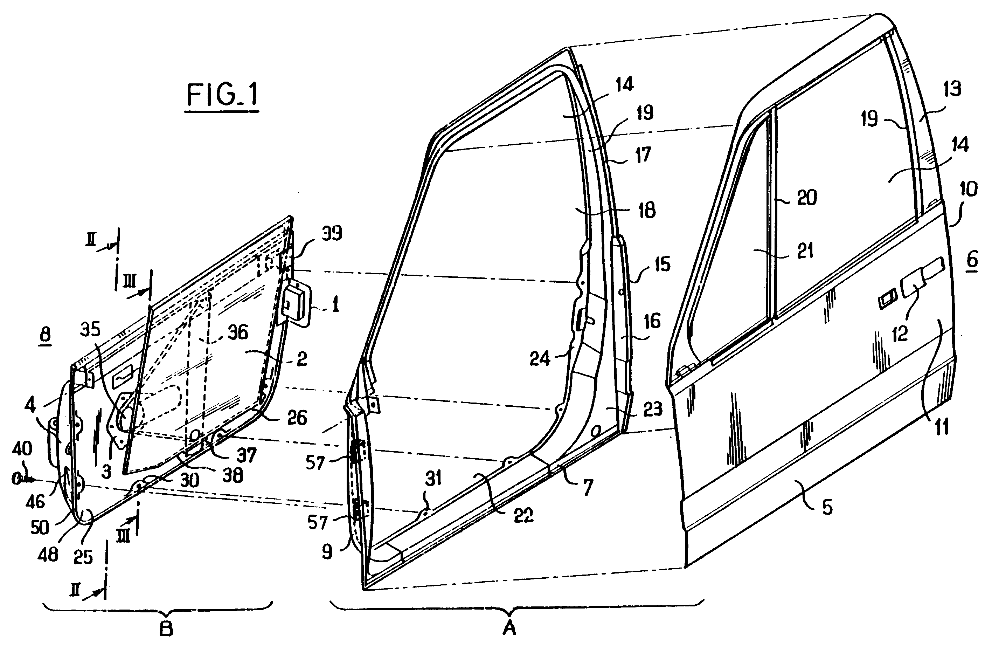

La réalisation d'une porte de véhicule conformément à la présente invention commence par la réalisation de deux sous-ensembles rigides, distincts A et B visibles à la figure 1, dont chacun présente en lui-même une rigidité insuffisante au regard de la rigidité prédéterminée que l'on désire communiquer à la porte, cette rigidité prédéterminée résultant d'un assemblage mutuel ultérieur des deux sous-ensembles A et B.

Le premier sous-ensemble A, avantageusement réalisé par emboutissage puis assemblage, généralement soudé et/ou collé, de pièces de tôle, comporte une partie 5 formant panneau extérieur, destinée à constituer le côté de la porte tourne vers l'extérieur 6 du véhicule, et une partie 7 formant cadre, constituant autour de la partie 5 formant panneau extérieur, du côté destiné à être tourné vers l'intérieur 8 du véhicule, un rebord continu 9. Dans l'exemple illustré, le premier sous-ensemble A est réalisé par emboutissage puis assemblage solidaire, notamment par soudure et/ou collage ou sertissage, de deux pièces de tôle 10, 15 dont la première constitue la partie 5 formant panneau extérieur, comportant une moitié inférieure 11 pleine si l'on excepte un trou 12 de montage de palette d'actionnement de la serrure 1, et une moitié supérieure 13 constituant un encadrement pour une fenêtre 14, divisé en une partie d'encadrement 18 bordée de glissières 19, 20 de réception de la glace coulissante 2 et en une partie d'encadrement 21 destinée à recevoir une glace fixe non représentée ou un déflecteur pivotant également non représenté ; ces notions de positionnement respectivement inférieur et supérieur, de même que les notions d'extérieur et d'intérieur, s'entendent par référence à la carrosserie du véhicule terminé, occupant sa position normale de circulation ; l'autre pièce 15 comporte également une moitié inférieure 16 et une moitié supérieure 17, accolées respectivement à la moitié inférieure 11 de la pièce 10 et à la moitié supérieure 13 de celle-ci, vers l'intérieur du véhicule, la moitié supérieure 17 constituant également un encadrement de fenêtre 14 et complétant à cet égard la moitié supérieure 13 de la pièce 10. Naturellement, on ne sortirait pas du cadre de la présente invention en concevant l'encadrement de la fenêtre 14 sous une autre forme, et par exemple en réalisant le premier sous-ensemble par assemblage de trois pièces correspondant respectivement à la moitié inférieure 11 de la pièce 10, à la moitié inférieure 16 de la pièce 15 et à un encadrement de fenêtre 14 remplaçant les moitiés supérieures respectives 13 et 17 des pièces 10 et 15.

Le premier sous-ensemble A tel qu'il vient d'être décrit est de préférence également muni des charnières 57 destinées au montage de la porte sur le reste du véhicule, lesquelles sont fixées sur la partie 7 formant cadre, par tout moyen approprié et par exemple par soudure, ce qui permet de monter le premier sous-ensemble A sur les autres constituants de la carrosserie du véhicule, à l'emplacement définitif de la porte, par l'intermédiaire desdites charnières et de le soumettre avantageusement aux traitements habituels de préparation de la tôle en vue de sa protection contre la corrosion et de sa préparation à la peinture, puis de peinture, simultanément aux autres constituants de la carrosserie du véhicule, sur une chaîne d'assemblage fonctionnant en continu, avant que l'on y assemble le deuxième sousensemble B.

Pour recevoir ce dernier, le rebord 9 délimite, dans la moitié inférieure 16 de la pièce 15, vers l'intérieur 8, une large ouverture 22 libérant pratiquement intégralement l'accès, depuis le côté destiné à être tourné vers l'intérieur 8 du véhicule, à un volume interne 23 que délimitent ensemble les moitiés inférieures respectives 11 et 16 des pièces 10 et 15 et qui est destiné à recevoir les moyens accessoires tels que le mécanisme de serrure 1, la glace coulissante 2 en position baissée ou escamotée, le mécanisme 3 de lève-glace, ou autres moyens accessoires traditionnellement logés dans un volume interne inférieur d'une porte de véhicule, notamment automobile.

En pratique, la pièce 15, en forme générale de cadre, est démunie de toute traverse notamment à la transition entre ses moitiés inférieure 16 et supérieure 17 si bien qu'au niveau de cette transition, la large ouverture communique sans délimitation avec l'encadrement de fenêtre 14 ; par ailleurs, c'est-à-dire vers le bas ainsi que vers l'avant et vers l'arrière si l'on se réfère à la position que la porte occupe sur la carrosserie du véhicule terminé, occupant sa position normale de circulation, la pièce 15 présente autour de la large ouverture 22, par rapport au rebord 9, un retour périphérique 24 approximativement parallèle à la moitié inférieure 11 de la pièce 10 si l'on suppose les pièces 10 et 15 assemblées mutuellement, ce retour 24 ne présentant perpendiculairement au rebord 9 qu'une dimension faible par rapport aux dimensions de la porte en élévation, cette dimension pouvant varier localement entre des valeurs de l'ordre du centimètre et des valeurs de l'ordre de quelques centimètres, et par exemple de l'ordre de 5 cm, ces chiffres étant indiqués à titre d'exemple non limitatif.

Le deuxième sous-ensemble B est conçu pour venir fermer sensiblement intégralement la large ouverture 22 en se superposant au retour 24 avec lequel on le solidarise par des moyens de fixation positive et de préférence amovible tels qu'un vissage ou un collage par des moyens autorisant un décollage ultérieur tels qu'une colle fusible à des températures compatibles avec la préservation des composants des deux sous-ensembles A et B, de façon propre à communiquer à la porte obtenue du fait de cet assemblage la rigidité prédéterminée souhaitée.

A cet effet, le deuxième sous-ensemble B, réalisé comme le premier sous-ensemble A par assemblage de plusieurs pièces, comporte notamment une pièce rigide 25 obtenue par exemple par emboutissage d'une tôle métallique et qui présente des dimensions telles qu'elle puisse couvrir sensiblement intégralement la large ouverture 22 ainsi que le retour 24 bordant celle-ci pour, à la fois, constituer pour la porte terminée une partie 26 formant médaillon intérieur et, après l'assemblage mutuel solidaire des deux sous-ensembles A et B, compléter par sa rigidité propre la rigidité du premier sous-ensemble A afin de communiquer à la porte la rigidité prédéterminée souhaitée.

En outre, cette pièce 25 sert de support direct à l'ensemble des moyens accessoires tels que le mécanisme de serrure 1, la glace coulissante 2, son mécanisme électrique 3 de lève-glace, et autres moyens accessoires destinés à être logés à l'intérieur du volume interne 23, ainsi qu'au garnissage intérieur 4 de porte et, de préférence, au maximum des autres moyens accessoires tels que 40, 41, 42, 43, 44, 45 destinés à équiper la porte, les uns et les autres assemblés à la pièce 25 avant l'assemblage mutuel des deux sous-ensembles A et B.

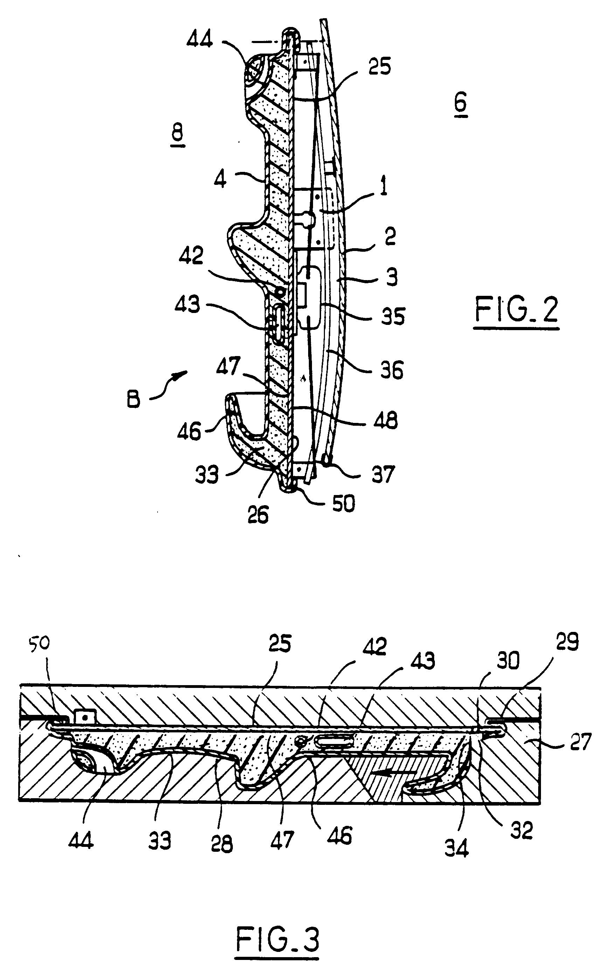

Lorsque, comme c'est le cas dans l'exemple illustré, la porte doit présenter un garnissage intérieur 4, formant partie intégrante du deuxième sous-ensemble B lorsque l'on met en oeuvre la présente invention, ce garnissage intérieur 4 peut être avantageusement rapporté de façon solidaire sur la pièce 25, avant montage des autres moyens accessoires tels que le mécanisme de serrure 1, la glace coulissante 2 et son mécanisme électrique 3 de lève-glace, sur cette pièce 25, par un procédé dont on a schématisé le principe à la figure 3, étant entendu que les modalités particulières de mise en oeuvre de ce procédé ressortent des aptitudes normales d'un Homme du métier.

Ce procédé de réalisation du garnissage intérieur 4 consiste à placer la pièce 25, destinée à constituer la partie de la porte formant médaillon intérieur et préalablement soumise aux traitements habituels de préparation de la tôle en vue de sa protection contre la corrosion, dans un moule 27, et plus précisément dans une empreinte 28 présentant une forme complémentaire de celle du garnissage intérieur 4 à réaliser, en ayant conçu cette empreinte 28 de telle sorte qu'elle enveloppe au moins localement, et par exemple périphériquement comme on l'a illustré en 29, la pièce 25 occupant dans cette empreinte 28 une position analogue à celle qu'elle doit occuper par rapport au garnissage intérieur 4. Lorsque l'assemblage mutuel des deux sous-ensembles A et B est destiné à être réalisé par vissage, la pièce 25 est, avant son introduction dans l'empreinte 28, convenablement perforée de trous 30 destinés à se placer en regard de trous 31 du retour 24 en vue de l'assemblage mutuel des deux sous-ensembles A et B, et l'empreinte 28 est conçue pour entrer au contact de la pièce 25, de part et d'autre de celle-ci, en regard de chacun des trous 30 et dans des zones étroitement localisées autour de chacun d'eux, comme on l'a illustre en 32 à la figure 3. On retrouve avantageusement, de façon non représentée, une disposition analogue autour de tout trou tel que 49 susceptible d'être prévu dans la pièce 25 pour autoriser par exemple le vissage de certains moyens accessoires ou le passage de moyens de commande manuelle de la serrure 1 ou du lève-glace 3 depuis le côté de la porte tourné vers l'intérieur 8 du véhicule ou encore le vissage d'une poignée de tirage de porte 45, d'un accoudoir ou d'un cendrier.

De préférence, avant la mise en place de la pièce 25 dans l'empreinte 28 du moule, on tapisse cette dernière d'une peau de garnissage 46 préalablement réalisée par moulage et/ou assemblage et l'on place également dans cette empreinte les moyens accessoires ne risquant pas de nécessiter de démontages ou remplacements ultérieurs tels que le chemin de câbles 42, de forme tubulaire, le conduit d'aération 43, la buse de dégivrage 44, placés entre la peau de garnissage 46 et la pièce 25 dans des positions correspondant à leurs positions définitives dans la porte. Avantageusement, la peau de garnissage 46 présente un rebord périphérique 50 qui, lorsque l'on place après elle la pièce 25 dans l'empreinte 28, est rabattu sur la totalité de la périphérie de la pièce 25, dans la zone 29 de l'empreinte 28.

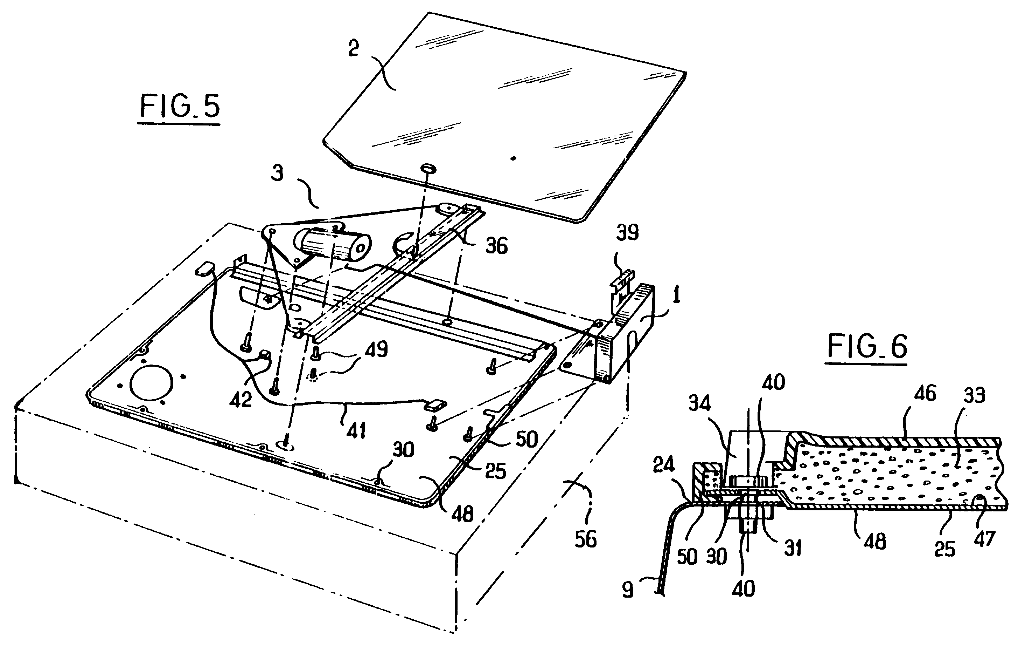

Une fois la peau de garnissage 46, les moyens accessoires précités 42, 43, 44 et la pièce 25 convenablement disposés à l'intérieur de l'empreinte 28 et après fermeture du moule, on introduit dans cette empreinte 28, et plus précisément entre la peau de garnissage 46 et la pièce 25, un matériau 33 initialement liquide ou pâteux mais susceptible de faire prise, et par exemple un matériau synthétique susceptible de s'expanser, jusqu'à emplir l'empreinte 28 en plaçant ainsi le matériau 33 en contact intime avec la peau de garnissage 46 et avec une face 47 de la pièce 25, en y noyant au moins partiellement cette dernière, par exemple périphériquement du fait de l'enveloppement partiel de celle-ci dans la zone 29 de l'empreinte 28, de même qu'en y noyant au moins partiellement les moyens accessoires tels que 42, 43, 44 préalablement placés dans l'empreinte 28 du moule 27. Ensuite, on autorise ou provoque la prise du matériau 33 afin de constituer le garnissage intérieur 4 et, simultanément, d'y ancrer solidairement la pièce 25, la peau de garnissage 46 et les moyens accessoires tels que 42, 43, 44 placés dans l'empreinte 28 du moule 27 ; on remarque qu'en regard de chacun des trous tels que 30 et 49 et des zones précitées étroitement localisées autour de ces derniers, le garnissage intérieur 4 présente une épargne 34 libérant localement l'accès à la pièce 25, comme le montre mieux la figure 6.

Après ouverture du moule 27, démoulage et séparation, vis-a-vis du moule 27, du tout solidaire alors formé par la pièce 25 et le garnissage intérieur de porte 4 ainsi que les moyens accessoires tels que 42, 43, 44 noyés dans celui-ci, on revêt de préférence l'autre face 48 de la pièce 25 d'une pellicule imperméable, adhésive, non représentée, puis, comme le montre la figure 5, on monte solidairement sur la pièce 25, par exemple par vissage automatique, à travers ladite pellicule, un maximum des moyens accessoires restants, a savoir au moins les moyens accessoires destinés à être placés sur la face 48 de la pièce 25 pour se loger ultérieurement à l'intérieur du volume interne 23 de la porte, tels que notamment le mécanisme de serrure 1, le mécanisme 3 de lève-glace, ici électrique et comportant par exemple, outre un moteur électrique 35, une coulisse 36 portant la glace 2 par l'intermédiaire d'un coulisseau 37 en prise avec un bord inférieur 38 de la glace 2, et les moyens de connexion électrique correspondants représentés sous forme du faisceau de câbles 41 que l'on engage partiellement dans le chemin de câbles 42 ; lors de ce montage, la glace 2 est disposée dans une position correspondant à sa position baissée, c'est-à-dire d'escamotage à l'intérieur de la porte et, de préférence, on monte également de façon solidaire sur la pièce 25 une amorce de glissière 39 placée en prise avec la glace 2 à l'état escamoté ou baissé en vue de retenir celle-ci conjointement avec le rail 37 et la coulisse 36, d'une part, et susceptible de se placer dans le prolongement de la glissière 19 lors de l'assemblage mutuel ultérieur des deux sous-ensembles A et B, d'autre part ; naturellement, on pourrait prévoir également une telle amorce de glissière 39 apte à se placer dans le prolongement de la glissière 20 lors de cet assemblage mutuel ultérieur des deux sous-ensembles A et B.

Ces moyens accessoires destines a se loger ultérieurement à l'intérieur du volume interne 23 de la porte sont montés par intervention du côté de la face 48 de la pièce 25.

De préférence, au cours de la même opération de montage et en intervenant de ce même côté, on monte également sur cette pièce 25, par exemple par vissage notamment automatique, par les trous tels que 49, à travers la pellicule imperméable précitée, un maximum des moyens accessoires destinés à être tournes vers l'intérieur de la carrosserie du véhicule à réaliser, tels que la poignée de tirage 45, des panneaux décoratifs 51, un haut parleur 40 et une grille 52 de protection de celui-ci, des supports enjoliveurs 53 de tirette 54 d'ouverture de serrure et 55 de tirette 56 de verrouillage de serrure, ces exemples n'étant nullement limitatifs.

A cet effet, ces moyens accessoires tels que 45, 51, 53, 55 sont prépositionnés dans un gabarit de montage 56 visible à la figure 5, dans leurs positions relatives définitives schématisées à la figure 6, puis on pose sur ce gabarit de montage 56 le tout solidaire formé par la pièce 25, le garnissage intérieur de porte 4 et les moyens accessoires tels que 42, 43, 44 noyés dans celui-ci, dans une position relative également définitive, en laissant dégagée la face 48 alors éventuellement déjà revêtue de la pellicule imperméable précitée ou revêtue de celle-ci immédiatement après positionnement de ce tout solidaire sur le gabarit de montage 56 ; on peut ensuite procéder au vissage sur la pièce 25, par la face 48 de celle-ci ainsi revêtue, de l'ensemble des moyens accessoires autres que le garnissage intérieur de porte et les moyens accessoires tels que 42, 43, 44 noyés dans celui-ci.

On concevra aisément que le mécanisme de serrure 1, la glace 2 et son mécanisme électrique 3 de lève-glace, le garnissage intérieur 4, le chemin de câbles 42, le conduit 43, la buse 44, la poignée 45, les panneaux 51, le haut parleur 40 et sa grille 52, les supports 53 et 54 ne constituent que des exemples non limitatifs de moyens accessoires susceptibles d'être assemblés, conformément à la présente invention, à la pièce 25 pour constituer le deuxième sous-ensemble B avant l'assemblage de celui-ci avec le premier sous-ensemble A ; en outre, on concevra aisement que, selon les cas, l'ordre de montage des différents moyens accessoires sur la pièce 25 pourra être différent de celui qui vient d'être décrit et que, en particulier, le garnissage intérieur 4 éventuel pourra être monté postérieurement à tout ou partie des autres moyens accessoires précités, notamment par des moyens autres qu'un moulage direct sur la pièce 25.

Dès lors qu'au moins tous les moyens accessoires destinés à être logés à l'intérieur du volume interne 23 ont été montés sur la pièce 25 et, de préférence, que le garnissage intérieur 4 a été réalisé directement sur celle-ci comme on l'a décrit en référence à la figure 3, on présente le deuxième sous-ensemble B ainsi constitue en regard du sous-ensemble A constitué par ailleurs, dans une position relative telle que les moyens accessoires destinés à être logés dans le volume interne 23 se placent à l'intérieur de celui-ci et que le deuxième sous-ensemble B se superpose, par la pièce 25, au retour 24 du rebord 9 en couvrant sensiblement intégralement la large ouverture 22, avec coïncidence mutuelle des éventuels trous de vissage 30 et 31. On procède ensuite à l'assemblage solidaire des deux sous-ensembles A et B dans cette position, et plus précisément à l'assemblage solidaire de la pièce 25 du sous-ensemble A avec la partie formant caisson-cadre 7 du sous-ensemble B, autour de l'ouverture 22, notamment par vissage de la pièce 25 sur le retour 24 de la pièce 15 au moyen de vis 40 engagées, depuis le côté du sous-ensemble B destiné à être tourné vers l'intérieur 8 du véhicule, dans les trous 30, 31 ainsi placés en coïncidence et accessibles par les épargnes 34 aménagées dans le garnissage intérieur 4 lors du moulage de celui-ci dans le cas d'une réalisation conformement au mode de mise en oeuvre illustré à la figure 3, comme le montrent les figures 1 et 6 ; le rebord périphérique 50 de la peau de garnissage 46 sur la face 48 de la pièce 25 permet, au moment du serrage, d'effectuer une étanchéité régulière entre la pièce 25 et le retour 24, c'est-à-dire entre les deux sous-ensembles A et B, limitant ainsi les effets de bruit et passages d'air et d'eau. Naturellement, les trous 30, 31 et les épargnes 34 peuvent être omis lorsque l'on choisit d'assembler mutuellement les deux sous-ensembles A et B par des moyens autres qu'un vissage, étant entendu que leur assemblage mutuel doit réaliser une solidarisation mutuelle telle que, par coopération de leurs rigidités propres respectives, en elles-mêmes insuffisantes au regard de la rigidité prédéterminée que l'on désire communiquer à la porte, bien que suffisante pour autoriser le montage précité du sous-ensemble A seul sur les autres constituants de la carrosserie d'un véhicule, par les charnières 57, et le montage direct d'un maximum de moyens accessoires sur le sous-ensemble B, la porte présente après assemblage cette rigidité prédéterminée, et ceci sans qu'il soit nécessaire de prévoir de renforts.

Du fait de l'assemblage, ceux des moyens accessoires portés par le sous-ensemble B qui doivent coopérer avec des moyens accessoires portés par l'encadrement de porte, tels que la serrure 1 ou des moyens de connexion électrique non représentés pour le lève-glace électrique 3, ou avec des moyens accessoires montés ultérieurement sur la porte et plus précisément sur le sous-ensemble A, tels que la serrure 1 qui doit coopérer avec une palette d'actionnement montée ultérieurement dans le trou de montage 12, occupent des positions rigoureusement déterminées en fonction de cette coopération ultérieure.

On remarquera que la réalisation du deuxième sous-ensemble B peut être effectuée en dehors des chaînes d'assemblage et de traitement de carrosserie, sans risque de ralentir ces chaînes, et que l'assemblage des sous-ensembles B aux sous-ensembles A peut quant à lui s'effectuer sur ces chaînes par des opérations simples et rapides, ne nécessitant qu'un personnel réduit et peu de temps d'intervention sur les chaînes d'assemblage.

Bien entendu, l'invention n'est pas limitée à l'exemple de réalisation ci-dessus décrit et représenté et, au besoin, on pourra recourir a d'autres modes et formes de réalisation sans pour cela sortir du cadre de l'invention.

## Revendications

1. Procédé de réalisation d'une porte pour véhicule, notamment pour véhicule automobile, ladite porte devant offrir une rigidité prédéterminée, présentant un côté extérieur (6) et un côté intérieur (8) et comportant :
- un ensemble rigide comportant, de façon solidaire, une partie formant panneau extérieur (5), une partie formant médaillon intérieur (26), et une partie formant cadre (7), disposée entre la partie formant panneau extérieur (5) et la partie formant médaillon intérieur (26) et délimitant avec celles-ci un volume interne (23), ledit ensemble présentant ladite rigidité déterminée,
- des moyens accessoires (1, 2, 3, 4, 40, 42, 43, 44, 45, 51, 52, 53, 55) choisis dans un groupe comportant des mécanismes de serrure (1, 53, 55), de lève-vitre (3), des dispositifs de sonorisation (40, 52), de climatisation (43, 44), de connexion (42), d'éclairage, un garnissage intérieur (4) de porte, lesdits moyens accessoires (1, 2, 3, 4, 40, 42, 43, 44, 45, 51, 52, 53, 55) étant portés par ledit ensemble et au moins certains d'entre eux (1, 2, 3) étant logés à l'intérieur dudit volume interne (23),
ledit procédé incluant une étape au cours de laquelle on monte au moins ceux (1, 2, 3) desdits moyens accessoires (1, 2, 3, 4, 40, 42, 43, 44, 45, 51, 52, 53, 55) qui sont destinés à être logés à l'intérieur dudit volume interne (23) sur une pièce rigide (25) et étant caractérisé par la succession des étapes consistant a :
a) réaliser séparément un premier sous-ensemble rigide (A) comportant, de façon solidaire, la partie formant panneau extérieur (5) et la partie formant cadre (7), ladite partie formant cadre (7) présentant du côté intérieur (8) de la porte une large ouverture (22), et un deuxième sous-ensemble rigide (B) comportant ladite pièce rigide (25), qui présente des dimensions telles qu'elle puisse couvrir sensiblement intégralement ladite ouverture (22), afin de constituer la partie formant médaillon intérieur (26), et au moins ceux (1, 2, 3) desdits moyens accessoires (1, 2, 3, 4, 40, 42, 43, 44, 45, 51, 52, 53, 55) qui sont destinés à être logés à l'intérieur dudit volume interne (23), montés sur ladite pièce (25), chacun des premier et deuxième sous-ensembles (A, B) présentant intrinsèquement une rigidité insuffisante en comparaison avec ladite rigidité prédéterminée,
b) placer les premier et deuxième sous-ensembles (A, B) dans une position relative dans laquelle le deuxième sous-ensemble (B) couvre sensiblement intégralement ladite ouverture (22) et solidariser ladite pièce (25) avec la partie formant cadre (7), autour de ladite ouverture (22), pour constituer une porte offrant du fait de cette solidarisation ladite rigidité prédéterminée.

2. Procédé selon la revendication 1, caractérise en ce que l'on traite et peint le premier sous-ensemble (A) entre les étapes a) et b).

3. Procédé selon l'une quelconque des revendications 1 et 2, caractérisé en ce que, lors de l'étape a), on réalise le premier sous--ensemble (A) sous une forme comportant également des charnières (57) de montage de la porte sur le reste du véhicule, solidaires de ladite partie formant cadre (7).

4. Procédé selon l'une quelconque des revendications 1 à 3, caractérisé en ce que, lors de l'étape a), on réalise le deuxième sous-ensemble (13) sous une forme comportant également au moins certains (40, 42, 43, 44, 45, 51, 52, 53, 55) desdits moyens accessoires (1, 2, 3, 4, 40, 42, 43, 44, 45, 51, 52, 53, 55) qui sont destinés à être placés à l'extérieur dudit volume interne (23).

5. Procédé selon la revendication 4, caractérisé en ce que, lors de l'étape a), on réalise un garnissage intérieur (4) de porte en plaçant ladite pièce (25) dans un moule (27) de réalisation d'un garnissage intérieur (4) de porte par moulage d'un matériau (33) initialement liquide ou pâteux et susceptible de faire prise, puis en emplissant ledit moule (27) dudit matériau (33) en y noyant au moins partiellement ladite pièce (25), puis en autorisant ou provoquant la prise dudit matériau (33) pour constituer le garnissage intérieur (4) de porte en y ancrant solidairement ladite pièce (25), et en séparant ensuite du moule (27) ladite pièce, (25) portant solidairement le garnissage intérieur (4) de porte.

6. Procédé selon la revendication 5, caractérisé en ce que l'on tapisse le moule (27) d'une peau de garnissage (46) avant de l'emplir dudit matériau (33) de telle sorte que lors de la prise de celui-ci, ladite peau de garnissage (46) en devienne solidaire.

7. Procédé selon l'une quelconque des revendications 5 et 6, caractérisé en ce que l'on dispose à l'intérieur du moule (27), avant de l'emplir dudit matériau (33), certains (42, 43, 44) desdits moyens accessoires (1, 2, 3, 4, 40, 42, 43, 44, 45, 51, 52, 53, 55) autres que le garnissage intérieur (4) de porte de telle sorte que ces derniers soient noyés au moins partiellement par ledit matériau (33) lorsqu'on en emplit le moule (27) et s'ancrent solidairement dans ledit matériau (33) lors de la prise de celui-ci.

8. Procédé selon l'une quelconque des revendications 5 à 7, caractérisé en ce que, lors de l'étape a), on monte certains (1, 2, 3, 40, 45, 51, 52, 53, 55) desdits moyens accessoires (1, 2, 3, 4, 40, 42, 43, 44, 45, 51, 52, 53, 55), autres que le garnissage intérieur de porte (4) sur ladite pièce (25) après avoir séparé du moule (27) ladite pièce (25) portant solidairement le garnissage intérieur de porte (4).

9. Procédé selon l'une quelconque des revendications 1 à 8, caractérisé en ce que, lors de l'étape a), on réalise le premier sous-ensemble (17) sous une forme comportant des moyens (13, 17) formant encadrement et glissière (19, 20) de réception d'une glace (2) et le deuxième sous-ensemble (13) sous une forme comportant un mécanisme de lève-glace (3), une amorce (39) de glissière susceptible de se placer dans le prolongement desdits moyens (13, 17) formant encadrement et glissière (19, 20) lors de l'étape b) et une glace (2) à l'état baissé, en prise d'une part avec le mécanisme de lève-glace (3) et d'autre part avec ladite amorce de glissière (39).

10. Sous-ensemble rigide pour la réalisation d'une porte pour véhicule, notamment pour véhicule automobile, par la mise en oeuvre du procédé selon l'une quelconque des revendications 1 à 9, comportant de façon solidaire une partie formant panneau extérieur (5) et une partie formant cadre (7), ladite partie formant cadre (7) présentant du côté intérieur (8) de la porte une large ouverture (22) et ledit sous-ensemble (A) présentant intrinsèquement une rigidité insuffisante en comparaison avec une rigidité prédéterminée de la porte à réaliser.

11. Sous-ensemble selon la revendication 10, caractérisé en ce qu'il est traité et peint.

12. Sous-ensemble selon l'une quelconque des revendications 10 et 11, comportant des charnières (57) de montage de la porte sur le reste du véhicule, solidaires de ladite partie formant cadre (7).

13. Sous-ensemble selon l'une quelconque des revendications 10 à 12, comportant des moyens (13, 17) formant encadrement et glissière (19, 20) de réception d'une glace (2).

14. Sous-ensemble rigide pour la réalisation d'une porte pour véhicule, notamment pour véhicule automobile, par la mise en oeuvre du procédé selon l'une quelconque des revendications 1 à 9, comportant de façon solidaire une pièce rigide (25) destinée à constituer une partie formant medaillon intérieur (26) et des moyens accessoires (1, 2, 3, 4, 40, 42, 43, 44, 45, 51, 52, 53, 55) choisis dans un groupe comportant des mécanismes de serrure (1, 53, 55), de lève-vitre (3), des dispositifs de sonorisation (40, 52), de climatisation (43, 44), de connexion (42), d'éclairage, un garnissage intérieur (4) de porte, montés sur ladite pièce, ledit sous-ensemble (B) présentant intrinsèquement une rigidité insuffisante en comparaison avec une rigidité prédéterminée de la porte à réaliser.

15. Sous-ensemble selon la revendication 14, dans lequel ladite pièce (25) est au moins partiellement noyée dans un garnissage intérieur (4) de porte.

16. Sous-ensemble selon la revendication 15 en ce que certains (42, 43, 44) desdits moyens accessoires (1, 2, 3, 4, 40, 42, 43, 44, 45, 51, 52, 53, 55) sont au moins partiellement noyés dans le garnissage intérieur (4) de porte.

17. Sous-ensemble selon l'une quelconque des revendications 14 à 16, comportant un mécanisme de lève-glace, une amorce (39) de glissière de réception d'une glace (2) et une glace (2) à l'état baissé, en prise d'une part avec le mécanisme de lève-glace (3) et d'autre part avec ladite amorce (39) de glissière.

18. Porte pour véhicule, notamment pour véhicule automobile, susceptible d'être obtenue par mise en oeuvre du procédé selon l'une quelconque des revendications 1 à 9, ladite porte devant offrir une rigidité prédéterminée, présentant un côté extérieur (6) et un côté intérieur (8) et comportant :
- un ensemble rigide comportant, de façon solidaire, une partie formant panneau extérieur (5), une partie formant médaillon intérieur (26), et une partie formant cadre (7), disposée entre la partie formant panneau extérieur (5) et la partie formant médaillon intérieur (26) et délimitant avec celles-ci un volume interne (23), ledit ensemble présentant ladite rigidité déterminée,
- des moyens accessoires (1, 2, 3, 4, 40, 42, 43, 44, 45, 51, 52, 53, 55) choisis dans un groupe comportant des mécanismes de serrure (1, 53, 55), de lève-vitre (3), des dispositifs de sonorisation (40, 52), de climatisation (43, 44), de connexion (42), d'éclairage, un garnissage intérieur (4) de porte, lesdits moyens accessoires (1, 2, 3, 4, 40, 42, 43, 44, 45, 51, 52, 53, 55) étant portés par ledit ensemble et au moins certains d'entre eux (1, 2, 3) étant logés à l'intérieur dudit volume interne (23), au moins ceux (1, 2, 3) desdits moyens accessoires (1, 2, 3, 4, 40, 42, 43, 44, 45, 51, 53, 55) qui sont logés à l'intérieur dudit volume interne (23) étant portés par une pièce rigide (25),
caractérisée en ce qu'elle comporte :
- un premier sous-ensemble rigide (A) comportant, de façon solidaire, la partie formant panneau extérieur (5) et la partie formant cadre (7), ladite partie formant cadre (7) présentant du côté intérieur (8) de la porte une large ouverture (22), et un deuxième sous-ensemble rigide (B) comportant ladite pièce (25), qui présente des dimensions telles qu'elle couvre sensiblement intégralement ladite ouverture (22), de façon à constituer la partie formant médaillon intérieur (26), et au moins ceux (1, 2, 3) desdits moyens accessoires (1, 2, 3, 4, 40, 42, 43, 44, 45, 51, 52, 53, 55) qui sont destinés à être logés à l'intérieur dudit volume interne (23), montés sur ladite pièce (25), chacun des premier et deuxième sous-ensembles (A, B) présentant intrinsèquement une rigidité insuffisante en comparaison avec ladite rigidité prédéterminée, et
- des moyens (30, 31, 40) de solidarisation mutuelle de la ladite pièce (25) et de la partie formant cadre (7), autour de ladite ouverture (22), pour constituer une porte offrant du fait de cette solidarisation ladite rigidité prédéterminée.

19. Porte selon la revendication 18, caractérisée en ce que le premier sous-ensemble (A) comporte en outre des charnières (57) de montage de la porte sur le reste du véhicule, solidaires de la partie formant cadre (7).

20. Porte selon l'une quelconque des revendications 18 et 19, caractérisée en ce que ladite pièce (25) est au moins partiellement noyée dans un garnissage intérieur de porte (4).

21. Porte selon la revendication 20, caractérisé en ce que certains (42, 43, 44) desdits moyens accessoires (1, 2, 3, 4, 40, 42, 43, 44, 45, 51, 52, 53, 55) sont au moins partiellement noyés dans le garnissage intérieur (4) de porte.

22. Porte selon l'une quelconque des revendications 18 à 21, caractérisée en ce que le premier sous-ensemble (4) comporte en outre des moyens (13, 17) formant encadrement et glissière (19, 10) de réception d'une glace (2) et en ce que le deuxième sous-ensemble (13) comporte un mécanisme de lève-glace (3), une amorce (39) de glissière de réception d'une glace (2), dans le prolongement desdits moyens (13, 17) formant encadrement et glissière (19, 20), et une glace (2) en prise d'une part avec le mécanisme de lève-glace (3) et d'autre part avec ladite amorce (39) de glissière et par ailleurs susceptible de venir en prise avec lesdits moyens (13, 17) formant encadrement et glissière (19, 20).

## Claims

1. Method of producing a door for a vehicle, especially for a motor vehicle, the said door having to exhibit predetermined stiffness, having an outer side (6) and an inner side (8) and including:
- a rigid assembly including, joined together, a part forming an outer panel (5), a part forming an inner inset panel (26), and a part forming a frame (7) located between the part forming an outer panel (5) and the part forming an inner inset panel (26) and delimiting an internal volume (23) with these parts, the said assembly exhibiting the said defined rigidity,
- accessories (1, 2, 3, 4, 40, 42, 43, 44, 45, 51, 52, 53, 55) selected from a group including lock mechanisms (1, 53, 55), window lifter mechanisms (3), sound devices (40, 52), air-conditioning devices (43, 44), connection devices (42), lighting devices, an interior door trim (4), the said accessories (1, 2, 3, 4, 40, 42, 43, 44, 45, 51, 52, 53, 55) being borne by the said assembly and at least some of them (1, 2, 3) being housed inside the said internal volume (23),
the said method including a step during which at least those (1, 2, 3) of the said accessories (1, 2, 3, 4, 40, 42, 43, 44, 45, 51, 52, 53, 55) which are intended to be housed inside the said internal volume (23) are fitted onto a rigid part (25), and being characterized by the succession of steps consisting in:
a) separately producing a first rigid subassembly (A) including, joined together, the part forming an outer panel (5) and the part forming a frame (7), the said part forming a frame (7) exhibiting a wide opening (22) on the inner side (8) of the door, and a second rigid subassembly (B) including the said rigid part (25) which has dimensions such that it can cover the said opening (22) substantially completely in order to make up the part forming the inner inset panel (26), and at least those (1, 2, 3) of the said accessories (1, 2, 3, 4, 40, 42, 43, 44, 45, 51, 52, 53, 55) which are intended to be housed inside the said internal volume (23) fitted to the said part (25), each of the first and second subassemblies (A, B) intrinsically exhibiting insufficient rigidity by comparison with the said predefined rigidity,
b) placing the first and second subassemblies (A, B) in a relative position in which the second subassembly (B) substantially completely covers the said opening (22) and joining the said part (25) to the part forming the frame (7) around the said opening (22) in order to make up a door which, by virtue of this joining-together, exhibits the said predefined rigidity.

2. Method according to Claim 1, characterized in that the first subassembly (A) is treated and painted between steps a) and b).

3. Method according to either one of Claims 1 and 2, characterized in that, during step a), the first subassembly (A) is made in a form also including hinges (57) for fitting the door to the rest of the vehicle, these hinges being joined to the said part forming a frame (7).

4. Method according to any one of Claims 1 to 3, characterized in that, during step a), the second subassembly (13) is produced in a form also including at least some (40, 42, 43, 44, 45, 51, 52, 53, 55) of the said accessories (1, 2, 3, 4, 40, 42, 43, 44, 45, 51, 52, 53, 55) which are intended to be placed outside the said internal volume (23).

5. Method according to Claim 4, characterized in that, in step a), an interior door trim (4) is produced by placing the said part (25) in a mould (27) for producing an interior door trim (4) by moulding a substance (33) which is initially liquid or pasty and capable of setting, then by filling the said mould (27) with the said substance (33) embedding the said part (25) therein, at least partially, then by allowing or causing the said substance (33) to set in order to make up the interior door trim (4), securely anchoring the said part (25) therein, and by next separating the said part (25) integrally bearing the interior door trim (4) from the mould (27).

6. Method according to Claim 5, characterized in that the mould (27) is lined with a lining skin (46) before it is filled with the said substance (33) so that when this substance sets, the said lining skin (46) becomes joined thereto.

7. Method according to either one of Claims 5 and 6, characterized in that some (42, 43, 44) of the said accessories (1, 2, 3, 4, 40, 42, 43, 44, 45, 51, 52, 53, 55) other than the interior door trim (4) are located inside the mould (27) before it is filled with the said substance (33) so that these accessories are embedded at least partly in the said substance (33) when the mould (27) is filled therewith and become securely anchored in the said substance (33) when the latter sets.

8. Method according to any one of Claims 5 to 7, characterized in that, in step a), some (1, 2, 3, 40, 45, 51, 52, 53, 55) of the said accessories (1, 2, 3, 4, 40, 42, 43, 44, 45, 51, 52, 53, 55) other than the interior door trim (4) are fitted onto' the said part (25) after the said part (25) bearing the interior door trim (4) joined to it has been separated from the mould (27).

9. Method according to any one of Claims 1 to 8, characterized in that, in step a), the first subassembly (17) is made in a form including means (13, 17) forming a surround and slideway (19, 20) for taking a window glass (2) and the second subassembly (13) is produced in a form including a window lifter mechanism (3), the start (39) of a slideway capable of being positioned in the extension of the said means (13, 17) forming a surround and slideway (19, 20) during step b) and a window glass (2) in the dropped state, in engagement on the one hand with the window lifter mechanism (3) and, on the other hand, with the said start (39) of the slideway.

10. Rigid subassembly for producing a door for a vehicle, especially for a motor vehicle, by employing the method according to any one of Claims 1 to 9, including, joined together, a part forming an outer panel (5) and a part forming a frame (7), the said part forming a frame (7) having a wide opening (22) on the inner side (8) of the door, and the said subassembly (A) intrinsically having insufficient rigidity by comparison with a predefined rigidity of the door to be produced.

11. Subassembly according to Claim 10, characterized in that it is treated and painted.

12. Subassembly according to either one of Claims 10 and 11, including hinges (57) for fitting the door on the rest of the vehicle, these hinges being joined to the said part forming the frame (7).

13. Subassembly according to any one of Claims 10 to 12, including means (13, 17) forming a surround and slideway (19, 20) for taking a window glass (2).

14. Rigid subassembly for producing a door for a vehicle, especially for a motor vehicle, by employing the method according to any one of Claims 1 to 9, including, joined together, a rigid part (25) intended to make up a part forming an inner inset panel (26) and accessories (1, 2, 3, 4, 40, 42, 43, 44, 45, 51, 52, 53, 55) selected from a group containing lock mechanisms (1, 53, 55), window lifter mechanisms (3), sound devices (40, 52), air-conditioning devices (43, 44), connecting devices (42), lighting devices, and an interior door trim (4) all fitted to the said part, the said subassembly (B) intrinsically having insufficient rigidity by comparison with a predefined rigidity of the door to be produced.

15. Subassembly according to Claim 14, in which the said part (25) is at least partially embedded in an interior door trim (4).

16. Subassembly according to Claim 15 in that some (42, 43, 44) of the said accessories (1, 2, 3, 4, 40, 42, 43, 44, 45, 51, 52, 53, 55) are at least partially embedded in the interior door trim (4).

17. Subassembly according to any one of Claims 14 to 16, including a window lifter mechanism, the start (39) of a slideway taking a window glass (2) and a window glass (2) in the dropped state, in engagement, on the one hand, with the window lifter mechanism (3) and, on the other hand, with the said start (39) of the slideway.

18. Door for a vehicle, especially for a motor vehicle, capable of being obtained by employing the method according to any one of Claims 1 to 9, the said door having to exhibit predetermined stiffness, having an outer side (6) and an inner side (8) and including:
- a rigid assembly including, joined together, a part forming an outer panel (5), a part forming an inner inset panel (26), and a part forming a frame (7) located between the part forming an outer panel (5) and the part forming an inner inset panel (26) and delimiting an internal volume (23) with these parts, the said assembly exhibiting the said defined rigidity,
- accessories (1, 2, 3, 4, 40, 42, 43, 44, 45, 51, 52, 53, 55) selected from a group including lock mechanisms (1, 53, 55), window lifter mechanisms (3), sound devices (40, 52), air-conditioning devices (43, 44), connection devices (42), lighting devices, an interior door trim (4), the said accessories (1, 2, 3, 4, 40, 42, 43, 44, 45, 51, 52, 53, 55) being borne by the said assembly and at least some of them (1, 2, 3) being housed inside the said internal volume (23),
at least those (1, 2, 3) of the said accessories (1, 2, 3, 4, 40, 42, 43, 44, 45, 51, 53, 55) which are housed inside the said internal volume (23) being borne by a rigid part (25),
characterized in that it includes:
- a first rigid subassembly (A) including, joined together, the part forming an outer panel (5) and the part forming a frame (7), the said part forming a frame (7) exhibiting a wide opening (22) on the inner side (8) of the door, and a second rigid subassembly (B) including the said part (25) which has dimensions such that it can cover the said opening (22) substantially completely in order to make up the part forming the inner inset panel (26), and at least those (1, 2, 3) of the said accessories (1, 2, 3, 4, 40, 42, 43, 44, 45, 51, 52, 53, 55) which are intended to be housed inside the said internal volume (23) fitted to the said part (25), each of the first and second subassemblies (A, B) intrinsically exhibiting insufficient rigidity by comparison with the said predefined rigidity, and
- means (30, 31, 40) for joining the said part (25) and the part forming a frame (7) together around the said opening (22) in order to make up a door which, owing to this joining-together, exhibits the said predefined rigidity.

19. Door according to Claim 18, characterized in that the first subassembly (A) further includes hinges (57) for fitting the door on the rest of the vehicle, these hinges being adjoined to the part forming a frame (7).

20. Door according to either one of Claims 18 and 19, characterized in that the said part (25) is at least partially embedded in an interior door trim (4).

21. Door according to Claim 20, characterized in that some (42, 43, 44) of the said accessories (1, 2, 3, 4, 40, 42, 43, 44, 45, 51, 52, 53, 55) are at least partially embedded in the interior door trim (4).

22. Door according to any one of Claims 18 to 21, characterized in that the first subassembly ( A ) further includes means (13, 17) forming a surround and slideway (19, 20 ) for taking a window glass (2) and in that the second subassembly ( B ) includes a window lifter mechanism (3), the start (39) of a slideway for taking a window glass (2), in the extension of the said means (13, 17) forming a surround and slideway (19, 20), and a window glass (2) in engagement, on the one hand, with the window lifter mechanism (3) and, on the other hand, with the said start (39) of the slideway and moreover capable of coming into engagement with the said means (13, 17) forming a surround and slideway (19, 20).

## Patentansprüche

1. Verfahren zum Herstellen einer Tür für Fahrzeuge, insbesondere Kraftfahrzeuge, die eine vorbestimmte Steifigkeit haben muß und eine Außenseite (6) sowie eine Innenseite (8) hat, umfassend:
- eine steife Baugruppe, welche fest miteinander verbunden eine Partie, welche ein Außenpaneel (5) bildet, eine Partie, welche ein flaches Innenbehältnis (26) bildet, und eine Partie, welche einen Rahmen (7) bildet und zwischen den beiden übrigen Partien (5 und 26) angeordnet ist und mit diesen ein Innenvolumen (23) einschließt, wobei die Baugruppe die genannte vorbestimmte Steifigkeit hat,
- Zubehörmittel (1, 2, 3, 4, 40, 42, 43, 44, 45, 51, 52, 53, 55) umfassend Mechanismen zum Verschließen (1, 53, 55), zum Fensterheben (3), zum Beschallen (40, 52), zum Klimatisieren (43, 44), zum Anschließen (42), zum Beleuchten, zum Innenauskleiden (4) der Tür, wobei diese Zubehörmittel (1, 2, 3, 4, 40, 42, 43, 44, 45, 51, 52, 53, 55) von der genannten Baugruppe getragen sind und mindestens einige von ihnen (1, 2, 3) innerhalb des genannten Innenvolumens (23) untergebracht sind,
wobei das Verfahren eine Stufe einschließt, während der wenigstens diejenigen Zubehörmittel (1, 2, 3) der Gesamtheit der Zubehörmittel (1, 2, 3, 4, 40, 42, 43, 44, 45, 51, 52, 53, 55), die zum Unterbringen in dem genannten Innenvolumen (23) bestimmt sind, auf einem starren Bauteil (25) vormontiert werden, gekennzeichnet durch eine Abfolge von Stufen wie folgt:
a) separates Herstellen einer ersten steifen Untergruppe (A) welche damit fest die das Außenpaneel (5) und die den Rahmen (7) bildende Partie umfaßt, wobei die den Rahmen (7) bildende Partie auf der Innenseite (8) der Tür eine große Öffnung (22) bildet, sowie einer zweiten steifen Untergruppe (B) mit dem besagten starren Bauteil (25), welches die genannte Öffnung (22) praktisch vollständig überdeckende Abmessungen hat, um die das flache Innenbehältnis (26) bildende Partie zu schaffen, und mit mindestens denjenigen Zubehörmitteln (1, 2, 3), welche zum Unterbringen in dem Innenvolumen (23) bestimmt und auf dem starren Bauteil (25) montiert sind, wobei die erste und die zweite Untergruppe (A, B) jeweils für sich genommen keine ausreichende Steifigkeit im Vergleich zu der genannten vorbestimmten Steifigkeit aufweisen,
b) Plazieren der ersten und der zweiten Untergruppe (A, B) in einer Relativposition zueinander, in welcher die zweite Untergruppe (B) praktisch insgesamt die genannte Öffnung (22) abdeckt, und Befestigen des genannten steifen Bauteils (25) an der den Rahmen (7) bildenden Partie um die genannte Öffnung (22) herum, um eine Tür zu bilden, welche aufgrund dieses Befestigens die genannte vorbestimmte Steifigkeit erhält.

2. Verfahren nach Anspruch 1, dadurch gekennzeichnet, daß man die erste Untergruppe (A) zwischen den Stufen a) und b) behandelt und einfärbt.

3. Verfahren nach Anspruch 1 oder 2, dadurch gekennzeichnet, daß man während der Stufe a) die erste Untergruppe (A) mit Scharnieren (57) zur Montage der Tür an der Karosserie versieht, die mit der den Rahmen (7) bildenden Partie fest verbunden sind.

4. Verfahren nach einem der Ansprüche 1 bis 3, dadurch gekennzeichnet, daß man während der Stufe a) die zweite Untergruppe (13) mit mindestens denjenigen Zubehörmitteln (40, 42, 43, 44, 45, 51, 52, 53, 55) versieht, die dazu bestimmt sind, außerhalb des genannten Innenvolumens (23) untergebracht zu werden.

5. Verfahren nach Anspruch 4, dadurch gekennzeichnet, daß man während der Stufe a) eine Türinnenauskleidung (4) dadurch schafft, daß man das genannte starre Bauteil (25) in eine Form (27) zum Erzeugen der Innenauskleidung (4) durch Formen eines anfänglich flüssigen oder pastösen und zu einem Aushärten geeigneten Materials (33) einbringt, anschließend das genannte Bauteil (25) mindestens teilweise in die Form (27) eintaucht, daß man ein Aushärten des Materials (33) zum Bilden der Innenauskleidung (4) der Tür zu einem festen Verankern des starren Bauteils (25) vonstatten gehen läßt oder provoziert und daß man anschließend die Form (27) von dem starren Bauteil (25) trennt, welches die damit nun fest verbundene Türinnenauskleidung (4) trägt.

6. Verfahren nach Anspruch 5, dadurch gekennzeichnet, daß man die Form (27) mit einer Deckhaut (46) vor dem Einfüllen des Materials (33) auskleidet, derart, daß beim Aushärten desselben die Deckhaut (46) damit fest verbunden wird.

7. Verfahren nach Anspruch 5 oder 6, dadurch gekennzeichnet, daß man vor dem Einfüllen des Materials (33) in den Innenraum der Form (27) gewisse Zubehörmittel (42, 43, 44) aus der Gesamtheit der Zubehörmittel (1, 2, 3, 4, 40, 42, 43, 44, 45, 51, 52, 53, 55) ausgenommen die Türinnenauskleidung (4) einbringt derart, daß diese letzteren Zubehörteile mindestens teilweise in das genannte Material (33) getaucht bzw. davon getränkt werden, wenn man die Form (27) damit füllt und daß sie beim Aushärten fest mit dem genannten Material (33) verankert werden.

8. Verfahren nach einem der Ansprüche 5 bis 7, dadurch gekennzeichnet, daß man während der Stufe a) einige Zubehörteile (1, 2, 3, 40, 45, 51, 52, 53, 55) ausgenommen die Türinnenauskleidung (4) auf dem genannten starren Bauteil (25) montiert, nachdem man dieses fest mit der Türinnenauskleidung (4) verbundene Bauteil (25) von der Form (27) getrennt hat.

9. Verfahren nach einem der Ansprüche 1 bis 8, dadurch gekennzeichnet, daß man während der Stufe a) die erste Untergruppe (A) mit Mitteln (13, 17) zum Bilden einer Einfassung und einer Gleitführung (19, 20) zur Aufnahme einer Fensterscheibe (2) und die zweite Untergruppe (B) mit einem Fensterhebemechanismus (3), einer Gleitführungsaufnahme (39), die in Verlängerung der genannten Mittel (13, 17) zum Bilden einer Einfassung und einer Gleitführung (19, 20) während der Stufe b) plaziert wird, und mit einer Fensterscheibe (2) in abgesenkten Zustand versieht, die betriebsmäßig einerseits mit dem Fensterhebermechanismus (3) und andererseits mit der Gleitführungsaufnahme (39) verbunden wird.

10. Starre Untergruppe zum Herstellen einer Fahrzeugtür, insbesondere für Kraftfahrzeuge, die durch Ausführen des Verfahrens nach einem der Ansprüche 1 bis 9 hergestellt ist, wobei eine Partie umfassend ein Außenpaneel (5) und eine Partie umfassend einen Rahmen (7) fest miteinander verbunden sind und die den Rahmen (7) umfassende Partie auf der Innenseite (8) der Tür eine große Öffnung (22) aufweist und die Untergruppe (A) für sich genommen keine ausreichende Steifigkeit im Bezug auf die vorbestimmte Steifigkeit der herzustellenden Tür aufweist.

11. Untergruppe nach Anspruch 10, dadurch gekennzeichnet, daß sie behandelt und eingefärbt ist.

12. Untergruppe nach Anspruch 10 oder 11, umfassend Scharniere (57) zur Montage der Tür an der Karosserie, wobei die Scharniere fest mit der den Rahmen (7) bildenden Partie verbunden sind.

13. Untergruppe nach einem der Ansprüche 10 bis 12, umfassend Mittel (13, 17), welche eine Einfassung und eine Gleitführung (19, 20) zur Aufnahme einer Fensterscheibe (2) bilden.

14. Starre Untergruppe zum Herstellen einer Tür für Fahrzeuge, insbesondere für Kraftfahrzeuge, die durch Ausführen eines Verfahrens nach einem der Ansprüche 1 bis 9 hergestellt ist, umfassend ein steifes Bauteil (25) zum Bilden einer ein flaches Innenbehältnis (26) schaffenden Partie und Zubehörmittel (1, 2, 3, 4, 40, 42, 43, 44, 45, 51, 52, 53, 55) umfassend Mechanismen zum Verschließen (1, 53, 55), zum Fensterheben (3), zur Beschallung (40, 52), zur Klimatisierung (43, 44), zum Anschließen (42), zur Beleuchtung, zur an dem besagten Bauteil angebrachten Türinnenauskleidung (4), wobei die Untergruppe (B) für sich genommen keine ausreichende Steifigkeit im Vergleich zu der vorbestimmten Steifigkeit der herzustellenden Tür aufweist.

15. Untergruppe nach Anspruch 14, bei welcher das genannte steife Bauteil (25) mindestens teilweise in eine Türinnenauskleidung (4) eingetaucht ist.

16. Untergruppe nach Anspruch 15, dadurch gekennzeichnet, daß einige Zubehörteile (42, 43, 44) der Gesamtheit der Zubehörteile (1, 2, 3, 4, 40, 42, 43, 44, 45, 51, 52, 53, 55) mindestens teilweise in die Innenauskleidung (4) der Tür eingetaucht sind.

17. Untergruppe nach einem der Ansprüche 14 bis 16, umfassend einen Fensterhebermechanismus, eine Gleitführungsaufnahme (39) einer Fensterscheibe (2) und eine Fensterscheibe (2) in abgesenktem Zustand, die betriebsmäßig einerseits mit dem Fensterhebermechanismus (3) andererseits mit der genannten Gleitführungsaufnahme (39) verbunden ist.

18. Tür für ein Fahrzeug, insbesondere ein Kraftfahrzeug, welche durch Ausführen eines Verfahrens nach einem der Ansprüche 1 bis 9 hergestellt ist, wobei die Tür eine vorbestimmte Steifigkeit aufweist und eine Außenseite (6) sowie eine Innenseite (8) hat, umfassend
- eine steife Anordnung, welche damit fest verbunden eine Partie zum Bilden eines Außenpaneels (5), eine Partie zum Bilden eines flachen Innenbehältnisses (26) und eine Partie zum Bilden eines Rahmens (7) zwischen den beiden anderen genannten Partien aufweist und mit diesen ein Innenvolumen (23) eingrenzt, wobei die Gesamtanordnung die genannte vorbestimmte Steifigkeit aufweist,
- Zubehörmittel (1, 2, 3, 4, 40, 42, 43, 44, 45, 51, 52, 53, 55), umfassend Mechanismen zum Schließen (1, 51, 55), zum Fensterheben (3), zum Beschallen (40, 52), zum Klimatisieren (43, 44), zum Anschließen (42), zum Beleuchten und zur Türinnenauskleidung (4), wobei die Zubehörmittel (1, 2, 3, 4, 40, 42, 43, 44, 45, 51, 52, 53, 55) von der genannten Anordnung getragen sind und mindestens einige (1, 2, 3) dieser Zubehörmittel innerhalb des genannten Innenvolumens (23) aufgenommen und durch ein steifes Bauteil (25) unterstützt sind, dadurch gekennzeichnet, daß sie umfaßt:
- eine erste starre Untergruppe (A) welche die das Außenpaneel (5) bildende Partie und die den Rahmen (7) bildende Partie miteinander fest verbunden umfaßt, wobei die den Rahmen (7) bildende Partie auf der Innenseite (8) der Tür eine große Öffnung (22) hat, und eine zweite starre Untergruppe (B) umfassend das genannte steife Bauteil (25), welches im wesentlichen die genannte Öffnung (22) überdeckende Abmessungen aufweist derart, daß sie die das Innenbehältnis (26) bildendende Partie und mindestens die Zubehörteile (1, 2, 3) der Gesamtheit der Zubehörteile (1, 2, 3, 4, 40, 42, 43, 44, 45, 51, 52, 53, 55) abdeckt, die zur Aufnahme in dem Innenvolumen (23) bestimmt und an dem starren Bauteil (25) montiert sind, wobei beide Untergruppe (A, B) für sich genommen eine im Vergleich zu der vorbestimmten Steifigkeit nicht ausreichende Steifigkeit haben, und
- Mittel (30, 31, 40) zur gegenseitigen, festen Verbindung des steifen Bauteils (25) und der den Rahmen (7) bildenden Partie um die Öffnung (22) herum, um eine durch diese Befestigung mit der vorbestimmten Steifigkeit versehene Tür zu schaffen.

19. Tür nach Anspruch 18, dadurch gekennzeichnet, daß die erste Untergruppe (A) außerdem Scharniere (57) zur Anbringung der Tür an der Karosserie aufweist, die fest mit der den Rahmen (7) bildenden Partie verbunden sind.

20. Tür nach Anspruch 18 oder 19, dadurch gekennzeichnet, daß das genannte steife Bauteil (25) mindestens teilweise in eine Innenauskleidung (4) der Tür eingetaucht ist.

21. Tür nach Anspruch 20, dadurch gekennzeichnet, daß einige (42, 43, 44) der Zubehörteile (1, 2, 3, 4, 40, 42, 43, 44, 45, 51, 52, 53, 55) mindestens teilweise in die Türinnenauskleidung (4) eingetaucht sind.

22. Tür nach einem der Ansprüche 18 bis 21, dadurch gekennzeichnet, daß die erste Untergruppe (A) außerdem Mittel (13, 17) zum Bilden einer Einfassung und einer Gleitführung (19, 20) zur Aufnahme einer Fensterscheibe (2) aufweist und daß die zweite Untergruppe (B) einen Fensterhebermechanismus (3), eine Gleitführungsaufnahme (39) zum Aufnehmen einer Fensterscheibe (2) in Verlängerung der genannten Mittel (13, 17) zum Bilden einer Einfassung und Gleitführung (19, 20) und eine Fensterscheibe (2) in betriebsmäßiger Verbindung einerseits mit dem Fensterhebermechanismus (3) und andererseits mit der genannten Gleitführungsaufnahme (39) aufweist, um mit den genannten Mitteln (13, 17) zum Bilden der Einfassung und der Gleitführung (19, 20) zusammenwirken zu können.
